Europäisches Patentamt

(19) European Patent Office

Office européen des brevets

(11) Publication number: **0 051 296**
**B1**

(12) **EUROPEAN PATENT SPECIFICATION**

(45) Date of publication of patent specification: **12.06.85**

(51) Int. Cl.⁴: **G 11 B 11/14,** G 11 C 13/06

(21) Application number: **81109311.1**

(22) Date of filing: **29.10.81**

(54) A thermomagnetic recording medium and a method of thermomagnetic recording.

(30) Priority: **01.11.80 JP 154291/80**

(43) Date of publication of application:
**12.05.82 Bulletin 82/19**

(45) Publication of the grant of the patent:
**12.06.85 Bulletin 85/24**

(84) Designated Contracting States:
**AT DE FR GB IT NL**

(56) References cited:
**DE-B-2 163 607**
**FR-A-1 578 005**

**IBM TECHNICAL DISCLOSURE BULLETIN;
VOL: 14; NO: 1; June 1971, New York, G.S.
ALMASI et al. "Nonvolatile magneto-optical
memory element", page 342**

(73) Proprietor: **DAIDOTOKUSHUKO KABUSHIKI
KAISHA
66 Aza-Kuridashi Hoshizaki-cho Minami-ku
Nagoya-shi Aichi-ken (JP)**

(72) Inventor: **Tsunashima, Shigeru
No. 256-2845 Kuroishi
Hirabari, Tenpaku-cho Tenpaku-ku, Nagoya (JP)**

(74) Representative: **Vossius Vossius Tauchner
Heunemann Rauh
Siebertstrasse 4 P.O. Box 86 07 67
D-8000 München 86 (DE)**

Courier Press, Leamington Spa, England.

Description

The present invention relates to a new thermomagnetic recording medium and a new method of thermomagnetic recording.

Hitherto, a thermomagnetic recording medium has been known which consists of a substrate made of a non-magnetic material such as glass, ceramic, plastic and the like, and a recording layer made of a metallic magnetic material such as an alloy comprising two or more metals, e.g. iron, cobalt, chromium, manganese, gadolinium, terbium, bismuth and the like, or metallic oxide, e.g. iron oxide, rare earth metal-iron garnet and the like. In said thermomagnetic recording medium laser light is applied to the surface of the recording layer to heat the respective part of the surface at approximately Curie point or compensation point, and bias magnetic field is applied to said heated part to orientate the magnetization of said heated part in the opposite direction to that of another part and thus write in information, while reading-out of the information recorded is performed by applying another linear polarized laser light beam to the surface of the recording layer in which information is recorded and optically detecting the reflected light from the surface using a photo-detector.

The recording layer of the above-mentioned thermomagnetic recording medium has a simple layer structure and results in the following disadvantages:

1. When writing in at approximately Curie point a material having a lower Curie point must be used as the recording layer since it is difficult to heat the recording layer at high temperature when the laser is miniaturized to reduce the writing-in power or the writing-in speed (bit rate) is increased. Thus the readout signal may be low since the orientated magnetization is apt to become disorientated even at usual temperatures.

Further, the intensity of light must be lower than a certain value since the recorded information is erased by a marked increase in temperature of the recording layer with increasing intensity of light applied to the surface of the recording layer during reading-out; and the S/N (signal-to-noise) ratio may be low under such a low intensity of light since the S/N ratio is proportional to the square root of the intensity of light. The S/N ratio may be reduced by the above-mentioned two factors.

2. When writing in at approximately compensation point a wide tolerance in the composition of the recording medium is not permissible since the range of the temperature on writing-in and the range of the composition of the recording medium must be limited to obtain the higher coercive force. For this reason the strict criteria in the composition of the recording medium create difficulties in the preparation process thereof and, further, the recorded information is apt to be affected by the external magnetic field and the temperature, and the recording density also decreases.

FR—A—1,578,005 discloses a magnetic memory comprising an active magnetic layer consisting of a Fe—Ni alloy and an auxiliary magnetic layer consisting of a Pd—Co alloy. The Curie point of the auxiliary magnetic layer is lower than that of the active layer, whereas the coercive force of the auxiliary layer is higher than that of the active layer. The easy axis of magnetization and thus the magnetic ansitropy is in the plane of the two layers, and the active magnetic layer and the auxiliary magnetic layer are magnetically coupled.

DE—B—2 163 607 discloses a magneto-optical memory having a single layer. The easy axis of magnetization can be vertical with respect to the plane of stratification. As a material for the single layer a $Gd_2Fe_{17}$ alloy can be used.

Accordingly, an object of the present invention is to provide a method of thermomagnetic recording and a thermomagnetic recording medium in which the S/N ratio is not reduced at decreased writing-in power, in which a high coercive force is guaranteed in a wide range of temperature and composition of the recording medium, and in which the recorded information is stable against an external magnetic field. The invention is characterised by the features of the claims.

The invention is described in detail with reference to the accompanying drawing, in which

Figure 1 shows a partial side sectional view of a preferred embodiment of the invention;

Figure 2 shows the partial side sectional view on writing in;

Figure 3 shows the partial side sectional view on reading out;

Figure 4 is a plot showing the relation between the laser light irradiating time and the recorded bit diameter, and;

Figure 5 is a plot showing the relation between the temperature and the external magnetic field when the recorded information is erased.

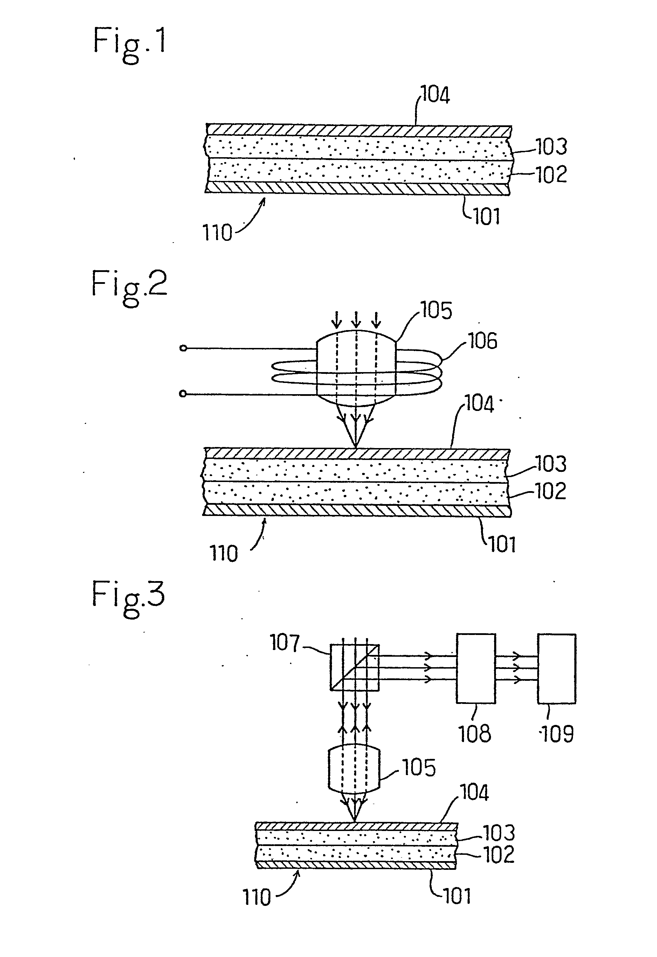

Referring now to Figure 1, a recording medium 110 consists of a substrate 101, a higher coercive force layer 102 formed on a surface of said substrate 101, a lower coercive force layer 103 formed on a surface of said higher coercive force layer 102 and a transparent protecting layer 104 covering the surface of said lower coercive force layer 103. Said substrate 101 is made of a non-magnetic material such as glass, ceramic, plastic and the like. Said higher coercive force layer 102 is made of an alloy comprising two or more metals such as transition metal, e.g. iron, cobalt, chromium, nickel and the like, lanthanide metal, e.g. gadolinium, terbium, dysprosium and the like, antimony metal, e.g. antimony, bismuth and the like, etc. said lower coercive force layer 103 substantially comprising a Gd-alloy. Said higher coercive force layer 102 can be vertically magnetized, i.e. it has a magnetic anisotropy with the easy axis of magnetization, perpendicular to the plane of stratification and it has a lower Curie point, desirably 200°C to 50°C, and more desirably 150°C to 100°C, while said lower coercive force layer 103 being also vertically magnetized has a Curie point of preferably more than 200°C. Further, said alloy making up said layers 102 and 103 is desirably amorphous or single crystal or fine polycrystal so as to record the information in high density and give a high S/N ratio on reading out the recorded information. Alloys suitable for the higher coercive force layer 102 include amorphous Tb—Fe alloy, amorphous Dy—Fe alloy and the like and alloys suitable for the lower coercive force layer 103 include amorphous Gd—Fe alloys, amorphous Gd—Co alloys and the like. The layers 102 and 103 are formed on the substrate 101 by a conventional method such as the vacuum evaporation method, the sputtering method and the like, and the thickness of the layer 102 is approximately 10 nm and that the layer 103 is approximately 10 to 50 nm, and the domain walls width $\delta w$ of the lower coercive force layer 103 should be equal to or more than the light transmitting thickness $1/\alpha$ of the layer 103 (where $\alpha$ is the absorption coefficient of light) in order to allow the higher coercive force layer 102 to exchange-combine or exchange-interact with the lower coercive force layer 103. Said transparent protecting layer 104 is made of a transparent non-magnetic material such as silicon oxide, tin oxide, glass and the like, and the thickness of the layer 104 is approximately 50 to 500 nm.

Although the higher coercive force layer 102 and the lower coercive force layer 103 are separately formed in the above-mentioned embodiment, the layers 102 and 103 may also be formed continuously by varying continuously the composition from the higher coercive force side to the lower coercive force side.

Further, the lower coercive force layer 103 may be formed on the substrate 101 and then the higher coercive force layer 102 may be formed on the layer 103 in the case that the substrate 101 is transparent.

Any thermomagnetic means can be applied for writing into the recording medium of the present invention, but the following means may be preferable.

Referring to Figure 2, near infrared radiation or visible radiation is radiated from a gas laser, a semiconductor laser or the like at 1 to 100 mW output, and said radiation focuses into a spot on the surface of the recording medium 110 through an object lens 105 to heat partially the higher coercive force layer 102 at approximately Curie point. A bias magnetic field of approximately 4 to 12 kA/m is applied on the region including said heated point by the magnetic field generating coil 106, and said heated point of the higher coercive force layer 102 is magnetized in the opposite direction to another part of the layer 102 by said bias magnetic field and/or the leakage magnetic field from the surrounding magnetic field. Thus the information is written into the higher coercive force layer 102 after the spot of radiation is removed; and said information written into the higher coercive force layer 102 is transferred to the lower coercive force layer 103 since the higher coercive force layer 102 and the lower coercive force layer 103 interact with each other (i.e. are reciprocally exchange-combined).

Referring to Figure 3, linear polarized light from another laser is focused into a spot on the surface of the recording medium 110 by making the light pass through a semi-transparent mirror 107 and the object lens 105, and the reflected light from the surface of the recording medium 110 is received by a photo-detector 108 through the object lens 105 and the semi-transparent mirror 107, and the reflected light received by the photo-detector 108 is then detected by a photodiode 109. The polarization plane of the reflected light from the point of the lower coercive force layer 103 where the information is transferred is rotated by means of the Kerr effect and the reading-out is performed by detecting said rotation of the polarization plane.

Further, the information may also be written into the lower coercive force layer 103 with partial heating approximately at compensation point by the laser spot simultaneously when writing into the higher coercive force layer 102. The information written into the lower coercive force layer 103 is maintained by the exchange forces from the higher coercive force layer 102. Said information is then read out from the lower coercive force layer 103.

The thermomagnetic recording medium of the present invention has the following advantages:

1. Advantages relating to the higher coercive force layer are the possibility of applying a low writing-in power, increasing the writing-in speed (bit rate), stabilizing the information written in against an external magnetic field and temperature change, permitting a wide tolerance in the composition of the recording medium, and further the possibility of recording in high density, approximately the light-disk range.
2. Advantages relating to the lower coercive force layer are that a high S/N ratio is obtained upon reading out since reading out is performed in the lower coercive force layer comprising a Gd-alloy having an excellent S/N ratio.

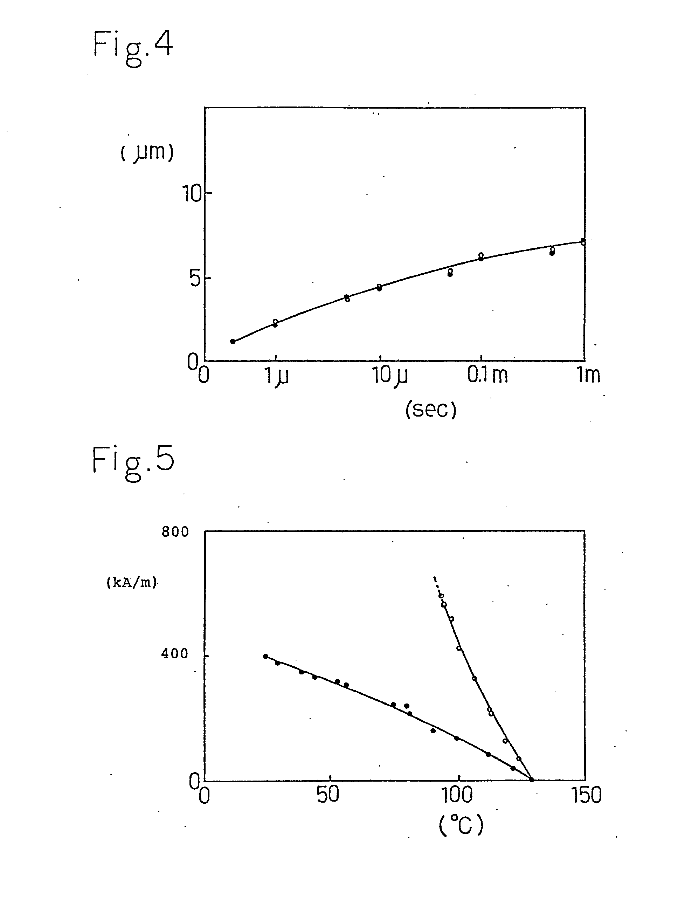

Example
The recording medium 110 is made of the following material:
Substrate 101: Glass plate 1 mm thick;
Higher coercive force layer 102: Amorphous Tb—Fe alloy 15.5 mm thick, with a coercive force of approximately 800 kA/m and a Curie point of 120 to 130°C; the open circles in Figures 4 and 5 relate to this Tb—Fe layer;
Lower coercive force layer 103: Amorphous Gd—Fe alloy 30 nm thick, with a coercive force of more than 40 kA/m, a Kerr rotation angle $\theta_k$ of approximately 36' (at 632.8 nm), and a Curie point of 210 to 220°C; the closed circles in Figures 4 and 5 relate to this Gd—Fe layer; Transparent protecting layer 104: Silicon oxide.

The layers 102 and 103 are formed by the vacuum evaporation method.

The information is written into said recording medium 110 using a He—Ne gas laser having 5 mW power and a bias magnetic field of 8 kA/m. Referring to Figure 4, the longitudinal axis shows the bit diameter (μm) and the horizontal axis shows the light irradiating time (sec). Bit recording having a 2 μm diameter is performed in 1 μ sec of light irradiating time and bit recording having a 1 μm diameter is performed in 0.5 μ sec of light irradiating time. Referring to Figure 5, the longitudinal axis shows the external magnetic field (kA/m) erasing the recorded information and the horizontal axis shows the temperature (°C), and the information recorded in the recording medium 100 is stable up to approximately 120°C under an external magnetic field of 80 kA/m.

**Claims**

1. Thermomagnetic recording medium with
a) a first and a second magnetic layer (102 and 103, respectively) both being magnetically anisotropic, wherein
b) the first magnetic layer (102) has a higher coercive force and a lower Curie point than the second magnetic layer (103), characterized in that
c) the second magnetic layer (103) substantially comprises a Gd-alloy,
d) the easy axis of magnetization of both magnetic layers (102, 103) is perpendicular to the plane of stratification, and
e) the first magnetic layer (102) exchange-interacts with the second magnetic layer (103).

2. Medium according to Claim 1, characterized in that the two layers (102, 103) are formed directly on each other.

3. Medium according to claim 1 or 2, characterized in that the two layers (102, 103) are formed on a substrate (101).

4. Medium according to any of claims 1 to 3, characterized in that the first layer (102) is formed on the substrate (101).

5. Medium according to any of claims 1 to 3, characterized in that the second layer (103) is formed on the substrate.

6. Medium according to any of the preceding claims, characterized in that the Curie point of the first layer (102) is 50 to 200°C, and that of the second layer (103) is more than 200°C.

7. Medium according to any of the preceding claims, characterized in that the two layers (102, 103) are made of an amorphous alloy, single crystal alloy, or fine polycrystal alloy.

8. Medium according to any of the preceding claims, characterized in that the first layer (102) is made of amorphous Tb—Fe alloy or amorphous Dy—Fe alloy, and the second layer (103) is made of amorphous Gd—Fe alloy or amorphous Gd—Co alloy.

9. Medium according to any of the preceding claims, characterized in that the layers (102, 103) are continuously formed by varying continuously the composition from the higher coercive force side to the lower coercive force side.

10. A method of thermomagnetic recording using a thermomagnetic recording medium with
a first and second magnetic layer (102 and 103, respectively) both being magnetically anisotropic, wherein
the first magnetic layer (102) has a higher coercive force and a lower Curie point than the second magnetic layer (103),
the second magnetic layer (103) substantially comprises a Gd-alloy,
the easy axis of magnetization of both magnetic layers (102, 103) is perpendicular to the plane of stratification, and
the first magnetic layer (102) exchange-interacts with the second magnetic layer (103), comprising writing in information by heating a part of said higher coercive force layer (102) at approximately Curie point employing converged laser light, and applying a bias magnetic field to a region of said layer (102) including the heated part.

11. A method of thermomagnetic recording according to Claim 10, said thermomagnetic recording medium further comprising the features according to any of claims 2—9.

**Patentansprüche**

1. Thermomagnetisches Aufzeichnungsmedium mit
a) einer ersten und einer zweiten magnetischen Schicht (102 bzw. 103), die beide magnetisch anisotrop sind, wobei
b) die erste magnetische Schicht (102) eine höhere Koerzitivkraft und einen niedrigeren Curie-Punkt als die zweite magnetische Schicht (103) aufweist, dadurch gekennzeichnet, daß
c) die zweite magnetische Schicht (103) im wesentlichen eine Gd-Legierung aufweist,
d) die leichte Achse der Magnetisierung beider magnetischer Schichten (102, 103) senkrecht zur Schichtebene liegt, und
e) die erste magnetische Schicht (102) eine Austausch-Wechselwirkung mit der zweiten magnetischen Schicht (103) aufweist.

2. Medium nach Anspruch 1, dadurch gekennzeichnet, daß die beiden Schichten (102, 103) direkt aufeinander ausgebildet sind.

3. Medium nach Anspruch 1 oder 2, dadurch gekennzeichnet, daß die beiden Schichten (102, 103) auf einem Substrat (101) ausgebildet sind.

4. Medium nach einem der Ansprüche 1 bis 3, dadurch gekennzeichnet, daß die erste Schicht (102) auf dem Substrat (101) ausgebildet ist.

5. Medium nach einem der Ansprüche 1 bis 3, dadurch gekennzeichnet, daß die zweite Schicht (103) auf dem Substrat ausgebildet ist.

6. Medium nach einem der Ansprüche 1 bis 5, dadurch gekennzeichnet, daß der Curie-Punkt der ersten Schicht (102) 50 bis 200°C und der Curie-Punkt der zweiten Schicht (103) mehr als 200°C beträgt.

7. Medium nach einem der Ansprüche 1 bis 6, dadurch gekennzeichnet, daß die beiden Schichten (102, 103) aus einer amorphen Legierung, einer einkristallinen Legierung oder einer feinen polykristallinen Legierung bestehen.

8. Medium nach einem der Ansprüche 1 bis 7, dadurch gekennzeichnet, daß die erste Schicht (102) aus einer amorphen Tb—Fe-Legierung oder einer amorphen Dy—Fe-Legierung und die zweite Schicht (103) aus einer amorphen Gd—Fe-Legierung oder einer amorphen Gd—Co-Legierung bestehen.

9. Medium nach einem der Ansprüche 1 bis 8, dadurch gekennzeichnet, daß die Schichten (102, 103) kontinuierlich durch kontinuierliche Veränderung der Zusammensetzung von der Seite mit hoher Koerzitivkraft zur Seite mit niedriger Koerzitivkraft ausgebildet sind.

10. Verfahren zur thermomagnetischen Aufzeichnung unter Verwendung eines thermomagnetischen Aufzeichnungsmedium mit einer ersten und einer zweiten magnetischen Schicht (102 bzw. 103), die beide magnetisch anisotrop sind, wobei die erste magnetische Schicht (102) eine höhere Koerzitivkraft und einen niedrigeren Curie-Punkt als die zweite magnetische Schicht (103) aufweist, die zweite magnetische Schicht (103) im wesentlichen eine Gd-Legierung aufweist, die leichte Achse der Magnetisierung beider magnetischen Schichten (102, 103) senkrecht zur Schichtebene liegt und die erste magnetische Schicht (102) eine Austausch-Wechselwirkung mit der zweiten magnetischen Schicht (103) aufweist, dadurch gekennzeichnet, daß Information eingeschrieben wird durch Erwärmen eines Teils der Schicht (102) mit höherer Koerzitivkraft bis etwa zum Curie-Punkt durch konvergentes Laserlicht und Aufbringen eines gerichteten magnetischen Feldes auf einen Bereich der Schicht (102) einschließlich des erwärmten Teiles.

11. Verfahren zur thermomagnetischen Aufzeichnung nach Anspruch 10, dadurch gekennzeichnet, daß das thermomagnetische Aufzeichnungsmedium ferner die Merkmale nach einem der Ansprüche 2 bis 9 aufweist.

**Revendications**

1. Milieu d'enregistrement thermomagnétique avec (102 et 103, respectivement), toutes deux étant magnétiquement anisotropes, dans lesquelles

b) la première couche magnétique (102) a une force coercitive plus élevée et un point de Curie plus faible que la seconde couche magnétique (103), caractérisé en ce que:

c) la seconde couche magnétique (103) comprend essentiellement un alliage de Gd,

d) l'axe aisé de magnétisation des deux couches magnétiques (102, 103) est perpendiculaire au plan de stratification, et

e) la première couche magnétique (102) entre en interaction par échange avec la seconde couche magnétique (103).

2. Milieu d'enregistrement suivant la revendication 1, caractérisé en ce que les deux couches (102, 103) sont formées directement l'une sur l'autre.

3. Milieu suivant les revendications 1 ou 2, caractérisé en ce que les deux couches (102, 103) sont formées sur un substrat (101).

4. Milieu suivant l'une quelconque des revendications 1 à 3, caractérisé en ce que la première couche (102) est formée sur le substrat (101).

5. Milieu suivant l'une quelconque des revendications 1 à 3, caractérisé en ce que la seconde couche (103) est formée sur le substrat.

6. Milieu suivant l'une quelconque des revendications précédentes, caractérisé en ce que le point de Curie de la première couche (102) est de 50 à 200°C, et en ce que celui de la seconde couche (103) est supérieur à 200°C.

7. Milieu suivant l'une quelconque des revendications précédentes, caractérisé en ce que les deux couches (102, 103) sont constituées d'un alliage amorphe, d'un alliage monocristallin ou d'un alliage finement polycristallin.

8. Milieu suivant l'une quelconque des revendications précédentes, caractérisé en ce que la première couche (102) est constituée d'un alliage Tb—Fe amorphe ou d'un alliage Dy—Fe amorphe, et en ce que la seconde couche (103) est constituée d'un alliage Gd—Fe amorphe ou d'un alliage Gd—Co amorphe.

9. Milieu suivant l'une quelconque des revendications précédentes, caractérisé en ce que les couches (102, 103) sont formées en continu en faisant varier continuellement la composition du côté de force coercitive la plus élevée au côté de force coercitive la plus faible.

10. Procédé d'enregistrement thermomagnétique en utilisant un milieu d'enregistrement thermomagnétique avec un première et une seconde couches magnétiques (102 et 103, respectivement), toutes deux étant magnétiquement anisotropes, dans lesquelles

la première couche magnétique (102) a une force coercitive plus élevée et un point de Curie plus faible que la seconde couche magnétique (103),

la seconde couche magnétique (103) comprend essentiellement un alliage de Gd,

l'axe aisé de magnétisation des deux couches magnétiques (102, 103) est perpendiculaire au plan de stratification, et

la première couche magnétique (102) entre en interaction avec échange avec la seconde couche magnétique (103), consistant à inscrire l'information en chauffant une partie de cette couche de force coercitive la plus élevée (102) aux environs du point de Curie en utilisant une lumière laser focalisée, et en appliquant un champ magnétique de polarisation à une région de cette couche (102) contenant la partie chauffée.

11. Procédé d'enregistrement thermomagnétique suivant la revendication 10, ce milieu d'enregistrement thermomagnétique comprenant en outre les caractéristiques suivant l'une quelconque des revendications 2 à 9;

Fig.1

Fig.2

Fig.3

1

Fig.4

Fig.5